# EUROPEAN PATENT APPLICATION

(11) **EP 3 127 638 A1**
(43) Date of publication of application: **08.02.2017**
(21) Application number: 15773807.1
(22) Date of filing: 31.03.2015
(51) Int. Cl.: B23B 29/24, B23B 29/32, B23Q 5/04

(54) **TOOL MOUNTING PORTION, TOOL HOLDER FOR MACHINE TOOL PROVIDED WITH SAID TOOL MOUNTING PORTION, AND MACHINE TOOL**

(30) Priority: 31.03.2014 JP 2014073260
(71) Applicant: Citizen Holdings Co., Ltd., Nishitokyo-shi, Tokyo 188-8511 (JP); Citizen Machinery Co., Ltd., Nagano 389-0206 (JP)
(72) Inventor: AOYAGI, Atsushi, Kitasaku-gun Nagano 389-0206 (JP)
(74) Representative: Köhler, Walter
(86) International application number: PCT/JP2015/060036
(87) International publication number: WO 2015/152192

(57) **Abstract**

This disclosure provides a tool attachment part that can turn a tool supported by a tool attachment part with a simple structure.

A tool attachment part (15A) includes an outer holder (50) detachably fixed to a fixed part (13a) and an inner holder (52) turnably and integrally supported by the outer holder (50). The inner holder (52) is formed with a support part (insertion portion Tb) to support a rotatable tool (14a). A drive-force transmission gear (53) is integrally provided on the inner holder (52). The drive-force transmission gear is detachably engaged with a tool turning drive gear (54) provided on a turret (12) side. The tool turning drive gear (54) is detachably attached to the turret (12) by the fixed part (13a) and is engaged with the drive-force transmission gear (53) such that the inner holder (52) turns, and thereby the rotatable tool (14a) supported by the support part turns.

## Description

### TECHNICAL FIELD

This invention relates to a tool attachment part for attaching a tool, a tool post of a machine tool equipped with the tool attachment part, and the machine tool.

### BACKGROUND ART

A turret tool post that is provided at an automatic lathe and includes a turret turnably supported by a post body has been known. With the turret tool post, a tool such as a bite and an end mill is turnably attached to the turret with a tool attachment part.

The above turret tool post rotates a rotatable tool attached to the tool attachment part and turns the rotatable tool relative to the turret so as to process a workpiece (see Patent Literature 1 and Patent Literature 2).

### CITATION LIST

### Patent Literature

Patent Literature 1: JP3129696 U
Patent Literature 2: JP2013-226611 A

### SUMMARY

### Technical Problem

Patent Literature 1 discloses a tool post including tool-attachment-part turning means for turning the tool (tool attachment part). The tool-attachment turning means is, however, configured with a plurality of gears complicatedly connected to each other. Patent Literature 2 discloses a tool post including a turret turning drive shaft that has a cylindrical shape and transmits a turn force to the turret, a rotatable-tool drive shaft attached to the tool attachment part (tool unit), and a turning drive shaft that transmits a turn force to the tool unit to turn the rotation shaft of the tool. However, the rotatable-tool drive shaft and the turning drive shaft are attached inside the turret turning drive shaft. Namely, the structure of the turret tool post is complicated.

An object of the present invention is, therefore, to provide a tool attachment part that can turn a tool supported by the tool attachment part with a simple structure, a tool post of a machine tool equipped with the tool attachment part, and the machine tool.

### Solution to Problem

In order to achieve the above object, a tool attachment part according to an embodiment of the present invention is a tool attachment part turnably holding a tool and attached to a tool post of a machine tool. The tool attachment part includes an outer holder that is detachably fixed to a fixed part formed on the tool post, and an inner holder that is turnably and integrally supported by the outer holder. The inner holder is formed with a support part to support the tool. Drive-force input means is provided to be associated with the inner holder. Here, the drive-force input means is detachably engaged with drive-force transmission means provided on the tool post side. The outer holder is fixed to the fixed part and is detachably attached to the tool post, and the drive-force input means is engaged with the drive-force transmission means such that the inner holder turns and thereby the tool supported by the support part turns.

A tool post of a machine tool equipped with a tool attachment part according to another embodiment of the present invention is a tool post of a machine tool including a tool attachment part turnably holding a tool and a body part attached with the tool attachment part, and the tool held by the tool attachment part is turned to process a material. The tool post includes drive-force transmission means that includes a fixed part to detachably fix the tool attachment part to the body part side and that is configured to turn the tool. The tool attachment part includes an outer holder that is detachably fixed to the fixed part and an inner holder that is turnably and integrally supported by the outer holder. The inner holder is formed with a support part to support the tool and is associated with drive-force input means, the drive-force input means detachably engaged with the drive-force transmission means. The drive-force input means is detachably attached to the body part by fixing the outer holder to the fixed part and is engaged with the drive-force transmission means such that the inner holder turns, and thereby the tool supported by the support part turns.

A machine tool according to another embodiment of the present invention includes the above-mentioned tool post.

### Advantageous Effects

In the present invention, a tool attachment part is attached to a fixed part formed on a tool post side. With this, it is possible to turn a tool supported by an inner holder that is turnably and integrally held by an outer holder.

### BRIEF DESCRIPTION OF DRAWINGS

[Fig. 1] Fig. 1 is a schematic perspective view illustrating a vicinity of a main spindle of an automatic lathe, which is one example of a machine tool equipped with a tool post and a tool attachment part according to Embodiment 1 of the present invention.
[Fig. 2] Fig. 2 is a schematic cross-sectional view along an X-axis direction illustrating an internal structure of the tool post according to Embodiment 1 of the present invention.
[Fig. 3] Fig. 3 is a schematic cross-sectional view illustrating a vicinity of a turret attached to the tool post according to Embodiment 1 of the present invention.
[Fig. 4] Fig. 4 is a schematic cross-sectional view illustrating a vicinity of a turret attached to a turret tool post according to Embodiment 2 of the present invention.
[Fig. 5] Fig. 5 is a schematic cross-sectional view illustrating a vicinity of a turret attached to a turret tool post according to Embodiment 3 of the present invention.
[Fig. 6] Fig. 6 is a schematic cross-sectional view illustrating a vicinity of a turret attached to a turret tool post according to Embodiment 4 of the present invention.

### DESCRIPTION OF EMBODIMENTS

### Embodiment 1

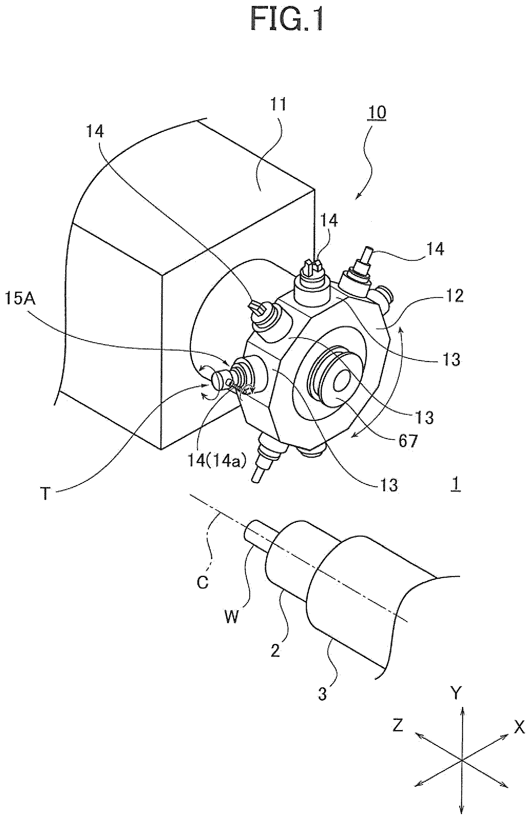

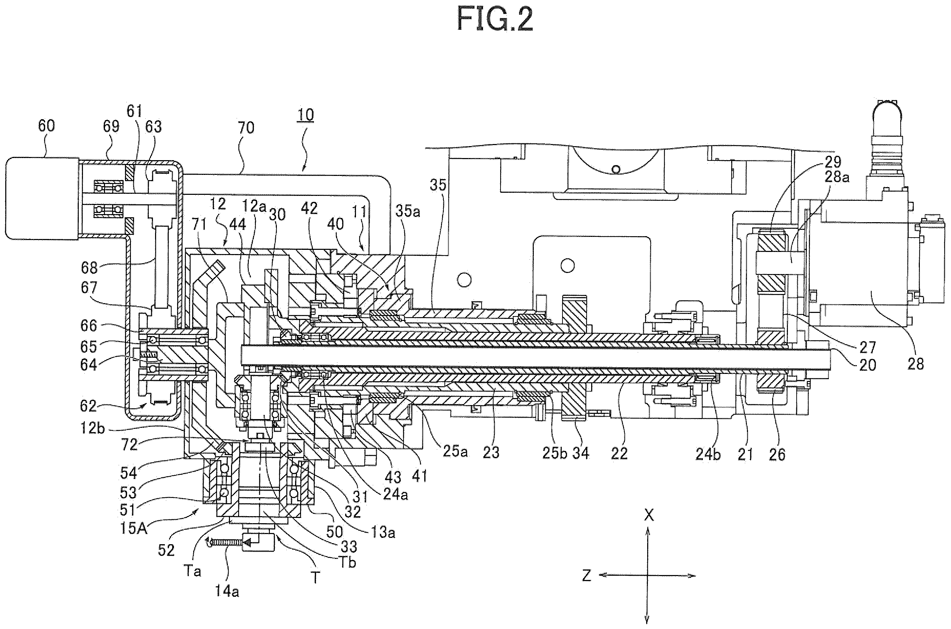

Fig. 1 is a schematic perspective view illustrating a vicinity of a main spindle of an automatic lathe, which is one example of a machine tool equipped with a turret tool post according to Embodiment 1 of the present invention. Fig. 2 is a schematic cross-sectional view illustrating an internal structure of the turret tool post according to Embodiment 1 of the present invention.

A main spindle 2 of an automatic lathe 1 is rotatably mounted on a main spindle headstock 3. A distal end part of the main spindle 2 detachably grips a workpiece W with a main spindle chuck (not illustrated). A turret tool post 10 is disposed in a vicinity of the main spindle 2. Note that in this embodiment, a direction along a main-spindle axis line C is defined as a Z-axis direction, a horizontal direction orthogonal to the Z-axis direction is defined as an X-axis direction, and an up-and-down direction orthogonal to both the Z-axis direction and the X-axis direction is defined as a Y-axis direction.

The turret tool post 10 includes a post body 11 and a turret 12 having a substantially polygonal shape. The turret 12 is supported by the post body 11 in an indexable and turnable manner. Various tools 14 are detachably attached to a plurality of turret faces 13 on the circumferential surface of the turret 12, respectively. Using the turret tool post 10 as a support, each of the tools 14 is turnably supported by the turret tool post 10 with the turret 12.

With an indexing turn of the turret 12, each of tools 14 turns and a desired tool 14 is selectively positioned at a processing position corresponding to a position of the workpiece W. Here, the post body 11 is configured to be controlled by a non-illustrated moving mechanism to move in the X, Y, and Z-axes directions. In accordance with the movement of the turret tool post 10, the workpiece W is processed by the tool 14 selected by the indexing turn of the turret 12.

As illustrated in Fig. 2, a cylindrical fixed shaft 22 is fixed inside the post body 11 along the Z-axis direction. A cylindrical tool-rotation drive shaft 21 is inserted into and rotatably supported by the fixed shaft 22 with bearings 24a, 24b. Further, a turret turning shaft 23 is rotatably fitted onto the fixed shaft 22. A pipe 20 is inserted into the tool-rotation drive shaft 21. Here, the pipe 20 is fixed to the post body 11.

A pulley 26 is attached to one distal end side (i.e., the right side on Fig. 2) of the tool-rotation drive shaft 21, and a pulley 29 is attached to a motor shaft 28a of a tool rotating motor 28. The pulley 26 and the pulley 29 are connected via a belt 27. With this, a rotation force of the tool rotating motor 28 is transmitted to the tool-rotation drive shaft 21 through the pulley 29, the belt 27, and the pulley 26. A bevel gear 30 is provided at the other distal end side (i.e., the left side on Fig. 2) of the tool-rotation drive shaft 21.

A turret turning gear 34 is integrally attached to one distal end side (i.e., right side on Fig. 2) of the turret turning shaft 23. A drive force of a turret turning motor (not illustrated) is transmitted to the turret turning gear 34. The turret 12 is integrally fixed to the other distal end side (i.e., the left side on Fig. 2) of the turret turning shaft 23. The turret 12 is turnably supported by the post body 11 with the turret turning shaft 23.

A sliding shaft 35 is fitted onto the turret turning shaft 23 with bearings 25a, 25b so as to be slidable in the Z-axis direction. The bearings 25a, 25b allow the sliding shaft 35 to slide in the Z-axis direction. At a distal end side of the sliding shaft 35, a piston 35a is formed and inserted into a cylinder chamber 40 that is formed in the post body 11. Further, a coupling element 41, which configures a coupling mechanism, is integrally fixed at the distal end side of the sliding shaft 35. Coupling elements 42 and 43, which face the coupling element 41, are integrally fixed to the post body 11 and the turret turning shaft 23 respectively. Here, the coupling element 41, the coupling element 42, and the coupling element 43 configure the coupling mechanism.

When the sliding shaft 35 is moved to the turret head side (i.e., the left side of Fig. 2) by operating the piston 35a, the coupling element 41 is engaged with the coupling elements 42, 43. The coupling element 42 fixed to the post body 11 is then engaged with the coupling element 43 fixed to the turret turning shaft 23 through the coupling element 41. Accordingly, the turn of the turret turning shaft 23 is stopped. When the sliding shaft 35 is slid to disengage the coupling element 41 from the coupling elements 42, 43, the coupling element 42 and the coupling element 43 are separated. As a result, the turret turning shaft 23 is allowed to turn.

By allowing the turret turning shaft 23 to turn and turning the turret turning shaft 23, the turret 12 is turned. The turn of the turret turning shaft 23 is then stopped at a predetermined turning angle position to achieve the indexing turn of the turret 12. With the indexing turn of the turret 12, a predetermined turret face 13 of the turret 12 is selected so as to select a desired tool 14.

A support part 44 is fixed at a distal end of the fixed shaft 22. The support part 44 is positioned inside a hollow part 12a of the turret 12. The support part 44 is integrally fixed to the post body 11 with the fixed shaft 22. A tool-rotation transmission shaft 32 is rotatably supported by the support part 44. A bevel gear 31 is attached to a distal end side of the tool-rotation transmission shaft 32. The bevel gear 31 is engaged with the bevel gear 30. The drive force is thereby transmitted to the tool-rotation transmission shaft 32 from the tool rotation shaft 21.

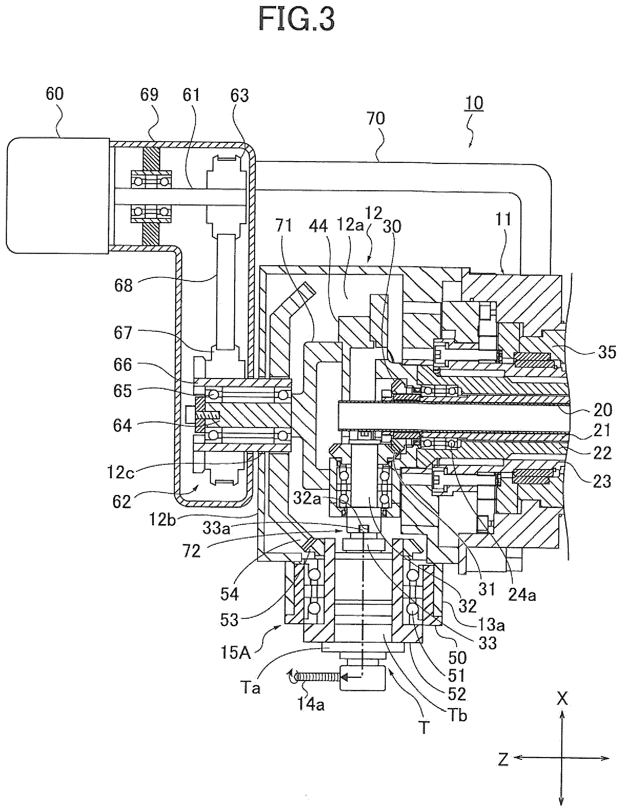

A fixed part 13a has a cylindrical shape and is formed on the turret face 13. As illustrated in Fig. 2 and Fig. 3, a rotatable tool device T is detachably fixed to the fixed part 13a with a tool attachment part 15A. Here, the rotatable tool device T holds a rotatable tool 14a such as a drill and an end mill as the tool 14, and the tool attachment part 15 is configured with an outer holder 50 and an inner holder 52.

The tool attachment part 15A includes the cylindrical outer holder 50 detachably fixed to an inner circumferential surface of the fixed part 13a, the inner holder 52 integrally and turnably supported at inside of the outer holder 50 with a bearing 51, and a drive-force transmission gear 53 provided on an outer circumferential surface on a distal end of the inner holder 52. The inner holder 52 has a hollow cylindrical shape. The hollow part of the inner holder 52 forms a support part to support the rotatable tool 14a with the rotatable tool device T. The rotatable tool device T is inserted into the inner holder 52 with a cylindrical insertion portion Tb thereof and thereby detachably fixed to the inner holder 52 with a flange Ta. Here, the flange Ta is provided on a distal end side of the insertion portion Tb. A tool-rotation input shaft 33 provided at a distal end part of the insertion portion Tb is protruded toward the inside of the turret 12 through the hollow part of the inner holder 52. Similar to a conventional device, the rotatable tool device T is configured such that the rotatable tool 14a is rotated by rotating the tool-rotation input shaft 33.

The drive-force transmission gear 53 is arranged to be engaged with a tool turning drive gear 54 when the tool attachment part 15A is attached inside the fixed part 13a. The drive-force transmission gear 53 and the tool turning drive gear 54 are both configured with bevel gears to engage with each other.

The tool turning drive gear 54 is connected to a drive-force transmission part 62. The drive-force transmission part 62 is connected to a motor shaft 61 of a tool turning motor 60.

The drive-force transmission part 62 includes a pulley 63 connected to the motor shaft 61 of the tool turning motor 60, a rotation shaft 66 rotatably supported by a fixed shaft 64 with a bearing 65, a pulley 67 attached to an outer circumferential surface of the rotation shaft 66, and a belt 68 stretched between the pulley 63 and the pulley 67. The tool turning drive gear 54 is integrally attached to the outer circumferential surface of the rotation shaft 66.

As described above, the drive-force transmission gear 53 that is engaged with the tool turning drive gear 54 is provided to be associated with the inner holder 52. Here, the drive-force transmission gear 53 corresponds to drive-force input means, and the tool turning drive gear 54 corresponds to drive-force transmission means.

The tool turning motor 60 is attached to a hollow cover member 69 positioned outside of an end face 12b of the turret 12. The motor shaft 61, the pulley 63, the belt 68, and the rotation shaft 66 on the pulley 67 side are accommodated inside the cover member 69. The rotation shaft 66 on the tool turning drive gear 54 side is provided inside the hollow part 12a. The cover member 69 is supported and fixed by the post body 11 with a support fixing part 70. The cover member 69 on the opposite side to the tool turning motor 60 side is positioned close to the outer circumferential surface of the rotation shaft 66 and surrounds the rotation shaft 66. Note that the tool turning motor 60 and the cover member 69, which are positioned outside of the end face 12b of the turret 12, are not illustrated in Fig. 1.

The fixed shaft 64 is integrally formed with a bracket 71 that is provided on the support part 44 inside the hollow part 12a. The rotation shaft 66 is disposed in a central opening part 12c formed on the end face 12b so as to be arranged along the Z-axis direction. The central opening part 12c is substantially in contact with the outer circumferential surface of the rotation shaft 66 so as to allow the turret 12 to turn and to prevent, for example, a chip from entering inside the hollow part 12a.

The tool attachment part 15A is attached to the fixed part 13a on the predetermined turret face 13. When the rotatable tool 14a (rotatable tool device T) held by the tool attachment part 15A is selected, the tool-rotation input shaft 33 is connected to the tool-rotation transmission shaft 32. Note that a clutch mechanism 72 is configured between the tool-rotation input shaft 33 and the tool-rotation transmission shaft 32. The clutch mechanism 72 is engaged only when the rotatable tool 14a attached to the tool attachment part 15A is selected.

The clutch mechanism 72 includes a groove 32a formed at a distal end of the tool-rotation transmission shaft 32 and a tenon-shaped projection 33a formed at a distal end of the tool-rotation input shaft 33. When the rotatable tool 14a is selected by turning the turret 12, the tenon-shaped projection 33a is engaged with (fitted to) the groove 32a. When the tenon-shaped projection 33a is engaged with the groove 32a, the clutch mechanism 72 becomes in an engaged state.

When the rotatable tool 14a on the tool attachment part 15A is selected by turning the rotatable tool 14a to the indexing position, the clutch mechanism 72 becomes in the engaged state. Accordingly, the rotation force generated by the tool rotating motor 28 is transmitted to the rotatable tool device T through the motor shaft 28a, the pulley 29, the belt 27, the pulley 26, the tool rotation shaft 21, the bevel gear 30, the bevel gear 31, the tool rotation transmission shaft 32, the clutch mechanism 72, and the tool-rotation input shaft 33. As a result, rotatable tool 14a is rotated around the shaft thereof by the rotation force transmitted to the rotatable tool device T and performs cutting process or the like on the workpiece W.

By rotating the tool turning motor 60, a turn force is transmitted to the inner holder 52 through the motor shaft 61, the belt 68, the rotation shaft 66, the tool turning drive gear 54 and the drive-force transmission gear 53. Since the rotatable tool device T is integrally fixed to the inner holder 52, the rotatable tool 14a is turned on the turret face 13 by the transmitted turn force together with the rotatable tool device T. As a result, it becomes possible to perform processing on the workpiece W under a state in which the rotatable tool 14a is inclined by a predetermined angle relative to the outer circumferential surface of or end face of the workpiece W.

As described above, in this embodiment, the tool attachment part 15A is attached to the fixed part 13a on the predetermined turret face 13 and the rotatable tool device T is installed on the tool attachment part 15A. With this, the rotatable tool device T itself is turned, and the rotatable tool 14a is thereby turned integrally with the rotatable tool device T. Therefore, it becomes possible to turn the rotatable tool on a general rotatable tool device, in which the rotatable tool is fixedly supported with respect to the turning direction, with a simple structure. Namely, it does not require a dedicated rotatable tool device in which the tool attachment part rotatably attached with the rotatable tool 14a is provided to be turnable with respect to the fixed part fixed on the turret face 13.

### Embodiment 2

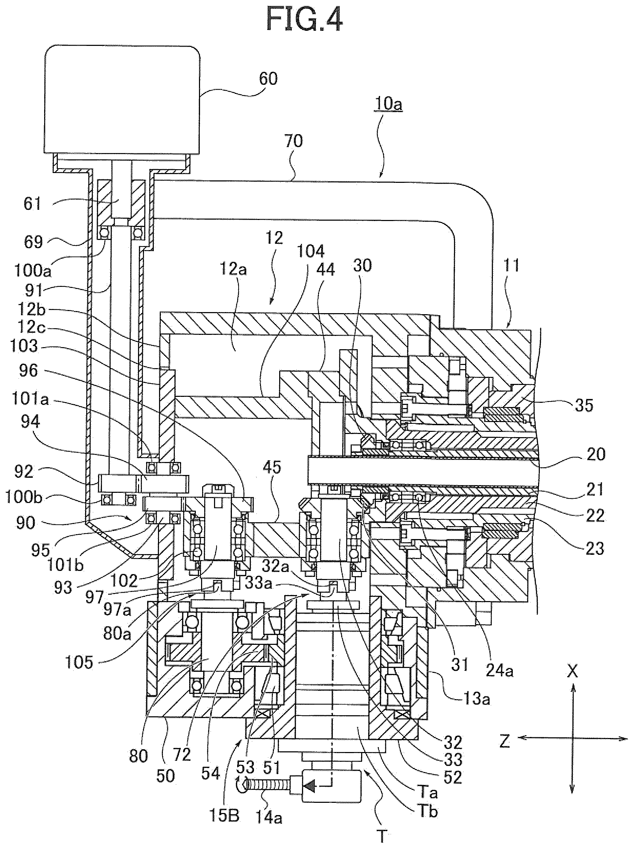

Fig. 4 is a schematic cross-sectional view illustrating a vicinity of a turret 12 attached to a turret tool post 10a according to Embodiment 2 of the present invention. The turret 12 of this embodiment is substantially identical to that of Embodiment 1, except for the configurations of a vicinity of a drive-force transmission part 90 and a tool attachment part 15B. Hence, the detailed description is omitted.

Similar to the tool attachment part 15A of Embodiment 1, the tool attachment part 15B of this embodiment is detachably attached to inside a fixed part 13a. The fixed part 13a is formed on a predetermined turret face 13 (illustrated in Fig. 1) of the turret 12.

The tool attachment part 15B includes a cylindrical outer holder 50 detachably fixed to an inner circumferential surface of the fixed part 13a, an inner holder 52 turnably and integrally supported at inside of the outer holder 50 with a bearing 51, and a drive-force transmission gear 53 provided around a center of an outer circumferential surface of the inner holder 52.

The inner holder has a hollow cylindrical shape. The hollow part of the inner holder 52 forms a support part to support a rotatable tool 14a with a rotatable tool device T. The rotatable tool device T is inserted into the inner holder 52 with a cylindrical insertion portion Tb thereof and thereby detachably fixed to the inner holder 52 with a flange Ta. Here, the flange Ta is provided on a distal end side of the insertion portion Tb.

A turn input shaft 80 is rotatably supported inside the outer holder 50. The turn input shaft 80 is integrally attached with a tool turning drive gear 54. The tool turning drive gear 54 is engaged with the drive-force transmission gear 53. The drive-force transmission gear 53 and the tool turning drive gear 54 are both configured with spur gears to engage with each other.

The drive-force transmission part 90 is configured on the turret 12 side. The drive-force transmission part 90 includes a turn shaft 91 connected to a motor shaft 61 of a tool turning motor 60, a gear 92 attached to the turn shaft 91, a gear 94 attached to a rotation shaft 93 and engaged with the gear 92, a gear 95 attached to the rotation shaft 93, a gear 96 engaged with the gear 95, and a turn transmission shaft 97 attached with the gear 96.

The turn shaft 91 and the rotation shaft 93 are rotatably supported inside a cover member 69 with bearings 100a, 100b, 101a, 101b. Here, the bearings 100a, 100b, 101a, 101b are provided on the cover member 69 side. The turn transmission shaft 97 is rotatably supported by a support body 45 with a bearing 102 and is arranged to be substantially in parallel to a tool-rotation transmission shaft 32. Note that the support body 45 is integrally provided on a support part 44. The drive-force transmission part 90 is provided in the hollow part 12a of the turret 12 and inside the hollow cover member 69 and is connected to the motor shaft 61 of the tool turning motor 60.

The hollow cover member 69, which is attached with the tool turning motor 60, is connected to a distal end side of a support fixing part 70 that is fixed to a post body 11 at a base end side thereof. The tool turning motor 60 (i.e., the cover member 69) is supported by and fixed to the post body 11 with the support fixing part 70. The tool turning motor 60 and the cover member 69 are positioned outside the end face 12b.

The distal end side (the end face 12b side) of the cover member 69 is fixed to a fixed plate 103. The fixed plate 103 has a circular shape and is projected from a hole 12c formed on the end face 12b. The fixed plate 103 is fixed to the support part 44 with a bracket 104. The fixed plate 103 is substantially in contact with the hole 12c so as to allow the turret 12 to turn and to prevent, for example, a chip from entering inside the hollow part 12a.

The tool attachment part 15B is attached to the fixed part 13a on the predetermined turret face 13. When the rotatable tool 14a (rotatable tool device T) attached to the tool attachment part 15B is selected, a rotation shaft 33 of the rotatable tool device T is connected to a tool-rotation transmission shaft 32 and the turn input shaft 80 is connected to the turn transmission shaft 97. Note that clutch mechanisms 72, 105 are respectively configured between the rotation shaft 33 and the tool-rotation transmission shaft 32 and between the turn input shaft 80 and the turn transmission shaft 97. The clutch mechanisms 72, 105 are engaged only when the rotatable tool 14a attached to the tool attachment part 15B is selected.

The clutch mechanism 105 includes a groove 97a formed at a distal end of the turn transmission shaft 97 and a tenon-shaped projection 80a formed at a distal end of the turn input shaft 80. When the rotatable tool 14a is selected by turning the turret 12, the tenon-shaped projection 80a is engaged with (fitted to) the groove 97a. When the tenon-shaped projection 80a is engaged with the groove 97a, the clutch mechanism 105 becomes in an engaged state. Note that the configuration of the clutch mechanism 72 is identical to that of Embodiment 1.

As described above, in this embodiment, the turn input shaft 80 that is engaged with the turn transmission shaft 97 of the drive-force transmission part 90 is provided so as to be associated with the inner holder 52. Here, the turn transmission shaft 97 corresponds to drive-force transmission means, and the turn input shaft 80 corresponds to drive-force input means. By fixing the outer holder 50 to the fixed part 13a, the tool attachment part 15B is attached to the turret 12. Accordingly, when the rotatable tool 14a held by the tool attachment part 15B is selected, the turn input shaft 80 is engaged with the turn transmission shaft 97 so as to allow the inner holder 52 to turn.

The turret tool post 10a according to this embodiment is configured as described above. Similar to Embodiment 1, when the rotatable tool 14a on the tool attachment part 15B is selected by turning the rotatable tool 14a to the indexing position, the rotation force is transmitted to the rotatable tool device T from the tool-rotation transmission shaft 32 through the clutch mechanism 72 and the tool-rotation input shaft 33. The rotatable tool 14a is rotated around the shaft thereof by the rotation force transmitted to the rotatable tool device T and then performs cutting process or the like onto a workpiece W.

Further, the clutch mechanism 105 is in the engaged state. By rotating the tool turning motor 60, the turn force is transmitted to the inner holder 52 through the motor shaft 61, the drive-force transmission part 90, the clutch mechanism 105, the turn input shaft 80, the tool turning drive gear 54, and the drive-force transmission gear 53. Since the rotatable tool device T is integrally fixed to the inner holder 52, the rotatable tool device T is turned on the turret face 13 by the transmitted turn force together with the rotatable tool 14a. As a result, it becomes possible to perform processing on the workpiece W under a state in which the rotatable tool 14a is inclined by a predetermined angle relative to the outer circumferential surface of or edge of the workpiece W.

As describe above, in this embodiment, the tool attachment part 15B is attached to the fixed part 13a on the predetermined turret face 13 and the rotatable tool device T is installed on the tool attachment part 15B. Therefore, similar to Embodiment 1, the rotatable tool device T itself is turned, and the rotatable tool 14a is thereby turned integrally with the rotatable tool device T.

### Embodiment 3

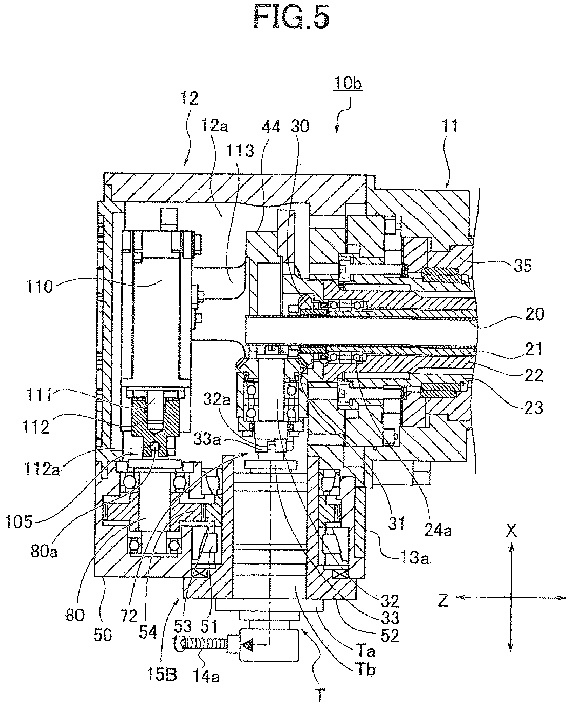

Fig. 5 is a schematic cross-sectional view illustrating a vicinity of a turret 12 attached to a turret tool post 10b according to Embodiment 3 of the present invention. As described later, the configuration of the turret 12 of this embodiment is substantially identical to that of Embodiment 2, except for a tool turning motor 110 provided inside a hollow part 12a and an attachment-part transmission shaft 112 attached to a motor shaft 111. Hence, the detailed description is omitted.

As illustrated in Fig. 5, the tool turning motor 110 is positioned inside a hollow part 12a and is supported by a support part 44 with a bracket 113. Note that electric lines connected to the tool turning motor 110 are led to a turret tool post 10b through a hollow pipe 20 and are connected to a controller (not illustrated).

The attachment-part transmission shaft 112 is provided at a distal end side of the motor shaft 111 of the tool turning motor 110. Between the attachment-part transmission shaft 112 and a turn input shaft 80 provided at the outer holder 50 side, a clutch mechanism 105 is provided. The clutch mechanism 105 connects the attachment-part transmission shaft 112 and the turn input shaft 80 only when a rotatable tool 14a is selected by an indexing turn of the turret 12. Here, the attachment-part transmission shaft 112 may be fixed to the motor shaft 111 by, for example, a pressure welding.

The clutch mechanism 105 includes a groove 112a formed at a distal end of the attachment-part transmission shaft 112 and a tenon-shaped projection 80a formed at a distal end of the turn input shaft 80. When the rotatable tool 14a is selected by turning the turret 12, the tenon-shaped projection 80a is engaged with (fitted to) the groove 112a. When the tenon-shaped projection 80a is engaged with the groove 112a, the clutch mechanism 105 becomes in an engaged state. Note that the configuration of the clutch mechanism 72 is identical to that of Embodiment 1 and Embodiment 2.

As described above, in this embodiment, the turn input shaft 80 that is engaged with the attachment-part transmission shaft 112 is provided to be associated with an inner holder 52. Here, the attachment-part transmission shaft 112 corresponds to drive-force transmission means, and the turn input shaft 80 corresponds to drive-force input means. The outer holder 50 is fixed to a fixed part 13a and a tool attachment part 15B is attached to the turret 12. Accordingly, when the rotatable tool 14a held by the tool attachment part 15B is selected, the turn input shaft 80 is engaged with the attachment-part transmission shaft 112 so as to allow the inner holder 52 to turn.

The turret tool post 10b according to this embodiment is configured as described above. Similar to Embodiments 1 and 2, when the rotatable tool 14a on the tool attachment part 15B is selected by turning the rotatable tool 14a to the indexing position, a rotation force is transmitted to a rotatable tool device T from a tool-rotation transmission shaft 32 through the clutch mechanism 72 and a tool-rotation input shaft 33. The rotatable tool 14a is rotated around the shaft thereof by the rotation force transmitted to the rotatable tool device T and then performs cutting process or the like onto a workpiece W.

Further, the clutch mechanism 105 is in the engaged state. By rotating the tool turning motor 110, the turn force is transmitted to the inner holder 52 through the motor shaft 111, the transmission shaft 112, the clutch mechanism 105, the turn input shaft 80, the tool turning drive gear 54, and the drive-force transmission gear 53. Since the rotatable tool device T is integrally fixed to the inner holder 52, the rotatable tool device T is turned on the turret face 13 by the transmitted turn force together with the rotatable tool 14a. As a result, it becomes possible to perform processing on the workpiece W under a state in which the rotatable tool 14a is inclined by a predetermined angle relative to the outer circumferential surface of or edge of the workpiece W.

As describe above, in this embodiment, the tool attachment part 15B is attached to the fixed part 13a on the predetermined turret face 13 and the rotatable tool device T is installed on the tool attachment part 15B. Therefore, similar to Embodiments 1 and 2, the rotatable tool device T itself is turned, and the rotatable tool 14a is thereby turned integrally with the rotatable tool device T.

Besides, in this embodiment, the tool turning motor 110 and the transmission shaft 112, which works as the drive-force transmission part, are provided inside the hollow part 12a of the turret 12. Therefore, it becomes possible to suppress the increase in size of the turret tool post 10b.

### Embodiment 4

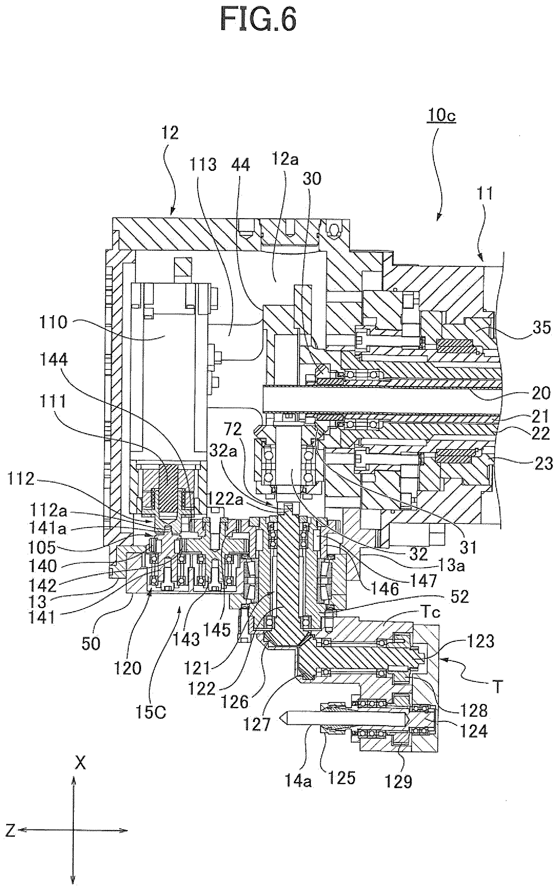

Fig. 6 is a schematic cross-sectional view illustrating a vicinity of a turret 12 attached to a turret tool post 10c according to Embodiment 4 of the present invention. As described later, the configuration of the turret 12 of this embodiment is substantially identical to that of Embodiment 3, except for a tool-attachment part 15C and a rotatable tool device T. Hence, the detailed description is omitted.

Similar to the tool attachment part 15A of Embodiment 1, the tool attachment part 15C of this embodiment is detachably fixed inside a fixed part 13 a formed on a predetermined turret face 13 (illustrated in Fig. 1) of the turret 12.

As illustrated in Fig. 6, a tool turning motor 110 is positioned inside a hollow part 12a and is supported by a support part 44 with a bracket 113. Note that electric lines connected to the tool turning motor 110 are led to a turret tool post 10c through a hollow pipe 20 and are connected to a controller (not illustrated).

The rotatable tool device T is detachably fixed to the fixed part 13a with the tool attachment part 15C. Here, the rotatable tool device T holds a rotatable tool 14a such as a drill and an end mill as the rotatable tool 14a, and the tool attachment part 15C is configured with an outer holder 50 and an inner holder 52.

The tool attachment part 15C includes a turn-force transmission mechanism 120 for transmitting a turn force to the inner holder 52 and a rotation-force transmission mechanism 121 for transmitting a rotation force to the rotatable tool 14a. An attachment-part transmission shaft 112 is provided at a distal end side of a motor shaft 111 of the tool turning motor 110. Between the attachment-part transmission shaft 112 and the turn-force transmission mechanism 120, a first clutch 105 is provided. The first clutch 105 connects the attachment-part transmission shaft 112 and the turn-force transmission mechanism 120 only when the rotatable tool 14a is selected by an indexing turn of the turret 12. The attachment-part transmission shaft 112 may be fixed to the motor shaft 111 by, for example, a screw or a pressure welding.

Between the other distal end side (the opposite side to a bevel gear 31) of a tool-rotation transmission shaft 32 and the rotation-force transmission mechanism 121, a second clutch 72 is provided. The second clutch 72 connects the tool-rotation transmission shaft 32 and the rotation-force transmission mechanism 121 only when the rotatable tool 14a is selected by the indexing turn of the turret 12.

The rotation-force transmission mechanism 121 includes a rotation-force transmission shaft 122. The rotation-force transmission shaft 122 is inserted into and rotatably supported by the inner holder 52 with bearings. The inner holder 52 is rotatably (or turnably) supported by the outer holder 50 with bearings. At a distal end part of the rotation-force transmission shaft 122, a bevel gear 126 is provided.

The second clutch 72 includes a groove 32a formed at a distal end of the tool-rotation transmission shaft 32 and a tenon-shaped projection 122a formed at a distal end of the rotation-force transmission shaft 122. When the rotatable tool 1a is selected by turning the turret 12, the tenon-shaped projection 122a is engaged with (fitted to) the groove 32a.

When the tenon-shaped projection 122a is engaged with the groove 32a, the second clutch 72 becomes in an engaged state such that a rotation force transmitted to the tool-rotation transmission shaft 32 is transmitted to the rotation-force transmission shaft 122.

The turn-force transmission mechanism 120 includes a first turn-force transmission shaft 141 attached with a gear 140, a second turn-force transmission shaft 143 integrally formed with a gear 142, a tool turning drive gear 144 attached to the second turn-force transmission shaft 143, and a cylindrical shaft 146 formed with a drive-force transmission gear 145. The gear 140 and the gear 142 are engaged, and the tool turning drive gear 144 and the drive-force transmission gear 145 are engaged.

The first turn-force transmission shaft 141 is rotatably supported by the outer holder 50 with bearings. The second turn-force transmission shaft 143 is rotatably supported by the outer holder 50 with bearings. The cylindrical shaft 146 is integrally fixed to the inner holder 52 using a connection member 147. A device body Tc of the rotatable tool device T is detachably and integrally fixed to a distal end side of the inner holder 52 by, for example, a bolt.

The rotatable tool device T includes a first rotation-force transmission shaft 123 rotatably supported by the device body Tc with bearings and a second rotation-force transmission shaft 124 rotatably supported by the device body Tc with bearings. The rotatable tool 14a is detachably attached to the second rotation-force transmission shaft 124 with a chuck mechanism 125.

The first rotation-force transmission shaft 123 and the second rotation-force transmission shaft 124 are associated with each other through gears 128, 129, which are engaged with each other through other gears (not illustrated). The first rotation-force transmission shaft 123 has a bevel gear 127 at a distal end part thereof. When the device body Tc is fixed to the inner holder 52, the bevel gear 126 and the bevel gear 127 are engaged to connect the rotation-force transmission shaft 122 and the first rotation-force transmission shaft 123. The rotation force is transmitted to the rotation-force transmission shaft 122 from the tool-rotation transmission shaft 32 through the second clutch 72. The rotation force is then transmitted from the rotation-force transmission shaft 122 to the rotatable tool 14a through the bevel gears 126, 127, the first rotation-force transmission shaft 123, the gears 128, 129, and the second rotation-force transmission shaft 124.

The first clutch 105 includes a recessed groove 112a and a tenon-shaped projection 141a. The recessed groove 112a is formed at a distal end of the attachment-part transmission shaft 112, which is provided on the post body 11 side of the turret tool post 10. The tenon-shaped projection 141a is formed at a distal end of the first turn-force transmission shaft 141 of the turn-force transmission mechanism 112 in the tool attachment part 15C attached to the turret 12 (turret face 13), which is disposed on the rotatable tool 14a side. With this configuration, when the turret 12 turns and the rotatable tool 14a is selected by the indexing turn, the tenon-shaped projection 141a is engaged with (fitted to) the groove 112a. The attachment-part transmission shaft 112 and the tool-rotation transmission shaft 32 are arranged to be substantially in parallel to each other.

When the tenon-shaped projection 141a is engaged with the groove 112a, the first clutch 105 becomes in the engaged state. Accordingly, the turn force transmitted from the motor shaft 111 to the attachment-part transmission shaft 112 is transmitted to the first turn-force transmission shaft 141 through the first clutch 105. The turn force is then transmitted to the inner holder 52 through the first turn-force transmission shaft 141, the gears 140, 142, the second turn-force transmission shaft 143, the tool turning drive gear 144, the drive-force transmission gear 145, and the cylindrical shaft 146. The inner holder 52 is turned by the transmitted turn force. That is, by turning the tool attachment part 15C to turn the inner holder 52, the rotatable tool device T is turned integrally with the inner holder 52, and the rotatable tool device T is thereby turned integrally with the rotatable tool 14a.

As described above, in this embodiment, the first turn-force transmission shaft 141 that is engaged with the attachment-part transmission shaft 112 is provided to be associated with an inner holder 52. Here, the attachment-part transmission shaft 112 corresponds to drive-force transmission means, and the first turn-force transmission shaft 141 corresponds to drive-force input means. Further, in this embodiment, a flange of the inner holder 52 corresponds to the support part to support the rotatable tool 14a with the rotatable tool device T. The outer holder 50 is fixed to the fixed part 13a and the tool attachment part 15C is attached to the turret 12. Accordingly, when the rotatable tool 14a held by the tool attachment part 15C is selected, the first turn-force transmission shaft 141 is engaged with the attachment-part transmission shaft 112 so as to allow the inner holder 52 to turn.

The turret tool post 10c according to this embodiment is configured as described above. When the rotatable tool 14a held by the tool attachment part 15C using the rotatable tool device T is selected by turning the rotatable tool 14a to the indexing position, the second clutch 72 becomes in the engaged state. Accordingly, by rotating the tool-rotating motor 28, a rotation force of the tool-rotating motor 28 is transmitted to the rotatable tool 14a from the tool-rotation transmission shaft 32 through the rotation-force transmission mechanism 121. The rotatable tool 14a is rotated by the transmitted rotation force and then performs cutting process or the like onto a workpiece W.

Further, the first clutch 105 is in the engaged state. By rotating the tool turning motor 110, the rotatable tool 14a is turned on the turret face 13 together with the rotatable tool device T through the turn-force transmission mechanism 120. As a result, it becomes possible to perform processing on the workpiece W under a state in which the rotatable tool 14a is inclined by a predetermined angle relative to the outer circumferential surface of or edge of the workpiece W.

As described above, in this embodiment, the tool attachment part 15C is attached to the fixed part 13a on the predetermined turret face 13 and the rotatable tool device T is held by the tool attachment part 15C. Therefore, similar to the preceding embodiments, the rotatable tool device T itself is turned, and the rotatable tool 14a is thereby turned integrally with the rotatable tool device T.

### CROSS-REFERENCE TO RELATED APPLICATION

The present application is based on and claims priority from Japanese Patent Application No. 2014-073260, filed on March 31, 2014, the disclosure of which is hereby incorporated by reference in its entirety.

### REFERENCE SIGNS LIST

1 Automatic lathe (Machine tool); 2 Main spindle; 3 Main spindle headstock; 10, 10a, 10b, 10c Turret tool post; 11 Holder body; 12 Turret; 13 Turret face; 13a Fixed part: 14a Rotatable tool; 15A, 15B, 15C Tool attachment part; 21 Tool rotation shaft; 23 Turret turning shaft; 32 Tool-rotation transmission shaft; 33 Tool-rotation input shaft; 50 Outer holder; 52 Inner holder; 53, 145 Drive-force transmission gear; 54, 144 Tool turning drive gear; 60, 110 Tool turning motor; 62, 90 Drive-force transmission part; 68 Belt; 80 Turn input shaft; 91 Turn shaft; 97, 112 Turn transmission shaft; C Main-spindle axis line; W Workpiece; T Rotatable tool device; Ta Flange; Tb Insertion portion

## Claims

1. A tool attachment part turnably holding a tool and attached to a tool post of a machine tool, comprising:
an outer holder that is detachably fixed to a fixed part formed on the tool post; and
an inner holder that is turnably and integrally supported by the outer holder, wherein
the inner holder is formed with a support part to support the tool,
drive-force input means is provided to be associated with the inner holder, the drive-force input means being detachably engaged with drive-force transmission means provided on the tool post side,
the drive-force input means is detachably attached to the tool post by the outer holder and is engaged with the drive-force transmission means such that the inner holder turns, and thereby the tool supported by the support part turns.

2. The tool attachment part according to claim 1, wherein an inner holder has a hollow cylindrical shape, and
when the rotatable tool is attached to the support part, a rotation force of the rotatable tool is transmitted to the tool attachment part through a hollow part of the inner holder.

3. The tool attachment part according to claim 1 or 2, wherein the drive-force transmission means includes a drive gear rotatably attached to the tool post, and
the drive-force input means includes a drive-force transmission gear that is detachably engaged with the drive gear.

4. The tool attachment part according to claim 3, wherein the drive gear and the drive-force transmission gear are bevel gears engaged with each other.

5. A tool post of a machine tool including a tool attachment part turnably holding a tool and a body part attached with the tool attachment part, the tool held by the tool attachment part being turned to process a material, the tool post comprising:
drive-force transmission means that includes a fixed part to detachably fix the tool attachment part to the body part side and that is configured to turn the tool, wherein
the tool attachment part includes an outer holder that is detachably fixed to the fixed part and an inner holder that is turnably and integrally supported by the outer holder,
the inner holder is formed with a support part to support the tool and is associated with drive-force input means, the drive-force input means detachably engaged with the drive-force transmission means,
the tool attachment part is detachably attached to the body part by fixing the outer holder to the fixing part, and
the drive-force input means is engaged with the drive-force transmission means such that the inner holder turns, and thereby the tool supported by the support part turns.

6. The tool post according to claim 5, wherein the drive-force transmission means includes a drive gear rotatably attached to the tool post, and
the drive-force input means includes a drive-force transmission gear that is detachably engaged with the drive gear.

7. The tool post according to claim 5, wherein the body part is a turret turnably supported by the tool post.

8. The tool post according to claim 7, wherein the drive gear is positioned inside the turret.

9. A machine tool comprising the turret tool post according to any one of claims 5 to 8.
